# EUROPÄISCHE PATENTANMELDUNG

(11) **EP 0 672 726 A2**
(43) Veröffentlichungstag der Anmeldung: **20.09.1995**
(21) Anmeldenummer: 95100663.4
(22) Anmeldetag: 19.01.1995
(51) Int. Cl.: C08L 83/08

(54) **Wässrige Lösungen von Organopolysiloxan-Ammoniumverbindungen, ihre Herstellung und Verwendung**

(30) Priorität: 17.03.1994 DE 4409140
(71) Anmelder: Degussa Aktiengesellschaft, D-60311 Frankfurt (DE)
(72) Erfinder: Panster, Peter, Dr., D-63517 Rodenbach (DE); Wieland, Stefan, Dr., D-63069 Offenbach (DE)

(57) **Zusammenfassung**

Die Erfindung betrifft wäßrige Lösungen von polymeren Organosiloxan-Ammoniumverbindungen, die Ionenaustauscher-Eigenschaften besitzen und ein Verfahren zur Herstellung aus festen Organopolysiloxanen. Die Lösungen finden Verwendung bei hydrophobierender Behandlung von anorganischen Werk- und Baustoffen.

## Beschreibung

Die Erfindung betrifft waßrige Lösungen von polymeren Organosiloxan-Ammoniumverbindungen, die Ionenaustauscher-Eigenschaften besitzen und ein Verfahren zur Herstellung.

Verbindungen dieser Art sind in fester und in Wasser nicht löslicher Form aus der DE-PS 38 00 564 und der DE-PS 31 20 195 bekannt.

Das Vorliegen in fester Form (feinteilig, kugelförmig) schränkt jedoch die Anwendungsmöglichkeiten dieser ein Kieselsäure-artiges Grundgerüst enthaltenden Polymere stark ein.

Aufgabe der Anmeldung ist die Bereitstellung wäßriger Lösungen von Ionenaustauschern, die geeignet sind, anorganische Werk- oder Baustoffe zu behandeln.

Gegenstand der Erfindung sind alkalische wäßrige Lösungen polymerer siliziumhaltiger Ionenaustauscher, die aus Einheiten der folgenden Formel bestehen 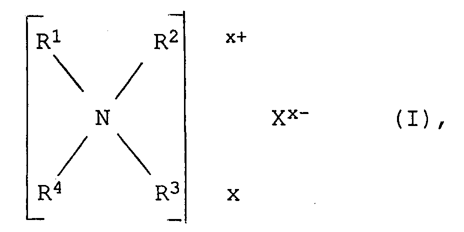
in welcher R¹ und R² gleich oder verschieden sind und eine Gruppe der allgemeinen Formel 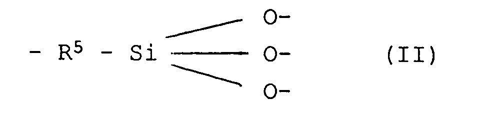
bedeuten, wobei die Stickstoffatome in (I) über die Reste R⁵ mit den Siliziumatomen in (II) verbunden und die freien Valenzen von O teilweise oder vollständig durch H oder Alkalimetallionen abgesättigt sind und R⁵ eine Alkylengruppe mit 1 bis 10 C-Atomen, eine Cycloalkylengruppe mit 5 bis 8 C-Atomen oder eine Einheit der allgemeinen Formel 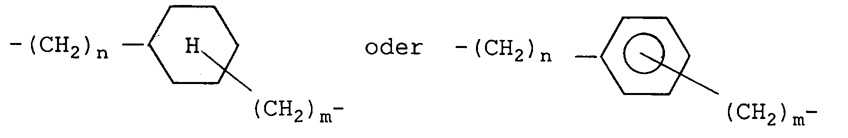
darstellt, in der
n eine Zahl von 1 bis 6 ist und die Zahl der stickstoffständigen Methylengruppen angibt und m eine Zahl von 0 bis 6 ist,
wobei die freien Valenzen der an das Siliziumatom gebundenen Sauerstoffatome wie bei Kieselsäuregerüsten durch Siliziumatome weiterer Gruppen der Formel (II) und/oder mit den Metallatomen einer oder mehrerer der vernetzenden Brückenglieder (III) 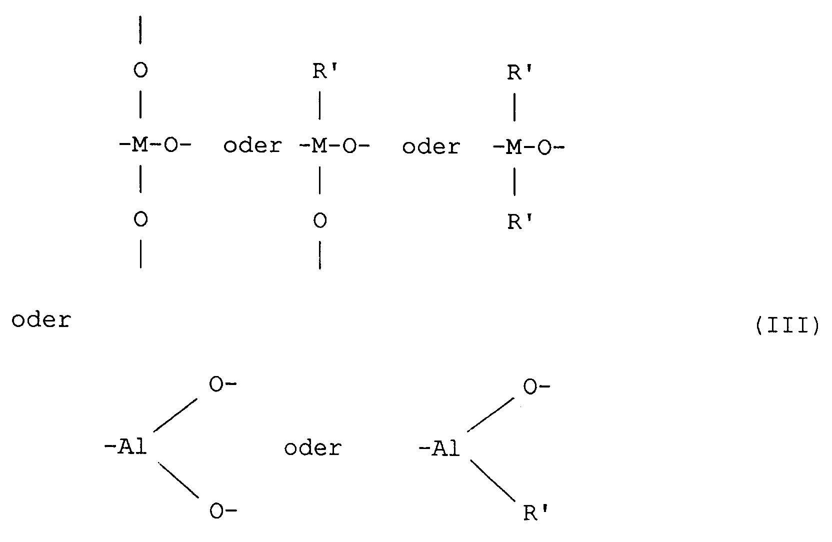
abgesättigt sind , wobei H ein Silizium-, Titan- oder Zirkoniumatom und R' eine lineare oder verzweigte Alkylgruppe mit 1 bis 5 C-Atomen ist und das Verhältnis der Siliziumatome aus den Gruppen der allgemeinen Formel (II) zu den Metallatomen in den Brückengliedern (III) 1 : 0 bis 1 : 10 beträgt,
in welcher R³ gleich R¹ oder R² oder Wasserstoff, eine lineare oder verzweigte Alkylgruppe aus 1 bis 20 C-Atomen, eine aus 5 bis 6 C-Atomen bestehende Cycloalkylgruppe ist und R⁴ Wasserstoff, eine lineare oder verzweigte Alkylgruppe mit 1 bis 20 C-Atomen oder eine aus 5 bis 8 C-Atomen bestehende Cycloalkylgruppe darstellt,
X einem Anion, insbesondere OH⁻ und x einer Zahl von 1 bis 3 entspricht.

Bevorzugte Verbindungen, die in der Lösung vorliegen, sind solche, bei denen R⁵ einer Propylengruppe entspricht.

Besonders geeignet sind auch solche, bei denen R¹, R² und R³ identische Bedeutungen besitzen und R⁴ der Methylgruppe entspricht.

Ein bevorzugt eingesetztes Edukt ist 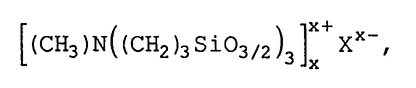
in Lösung gekennzeichnet durch die Formel 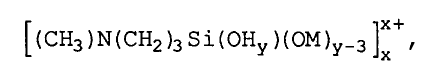
mit y = 0, 1, 2, 3, M:Alkalimetallion.

Entscheidend für die Löslichkeit ist die Anzahl der an Stickstoff gebundenen Gruppen der Formel (II). Sind nur R¹ und R² vom Typ der Formel (II), so ist eine bessere Löslichkeit des Polymers und damit eine höhere Konzentration der löslichen Organosiloxan-Ammonium-verbindungen gegeben, als in dem Falle, daß drei oder vier Substituenten am Stickstoff vom Typ (II) sind.

Dementsprechend deckt auch die mögliche Konzentration an gelösten Siloxan einen weiten Bereich von 0,1 bis 70 Gew.-% ab. Niedrigere Konzentrationen sind selbstverständlich möglich, aber wegen des geringen Wirkstoffgehaltes nur bedingt relevant. Im oberen Konzentrationsbereich kommt man zu hochviskosen Flüssigkeiten, die unter Umständen nur noch bei erhöhter Temperatur (∼ 40 - 100° C) flüssig sind, aber bei Raumtemperatur glasartig erstarren. Diese dann festen Substanzen können ohne weiteres in Wasser, gegebenenfalls unter Kochen gelöst werden. Ein vorheriges Zerkleinern des Feststoffes durch Brechen oder Mahlen kann angebracht sein.

Besonders günstig ist ein Gehalt von 5 - 30 Gew.-% an Siloxanamnoniumverbindungen in der wäßrigen Lösung, da der Gehalt für eine technische Anwendung hoch genug ist, die Lösungen aber noch gut gehandhabt bzw. durch Gießen, Sprühen, Tauchen auf Oberflächen appliziert werden können.

Für die Stabilität der wäßrigen Lösung gegenüber Feststoffausscheidung ist ein Gehalt an Alkalihydroxid von mindestens der 1,5-fachen Molmenge, bezogen auf die vorhandene molare Menge von in der OrganosiloxanAmmoniumverbindung gemäß Formel (I) vorhandenen Si-Atomen zuzüglich der gegebenenfalls vorhandenen molaren Mengen an Si-, Ti-, Zr- oder Al-haltigen Vernetzern, vorteilhaft. Höhere Konzentrationen an Alkalihydroxid sind natürlich ebenso möglich, so daß der Alkalihydroxidgehalt in der Lösung zwischen 0,01 und 50 Gew.-% liegen kann. Natürlich sind möglichst niedrige Basenkonzentrationen für die technische Anwendung angestrebt. In der erfindungsgemäßen Lösung können die Sauerstoffatome in den Gruppen der Formel (II) teilweise oder vollständig durch Alkalimetalle oder Wasserstoff oder teilweise durch Silizium, Titan, Zirkonium, Aluminium oder andere Metalle, die in den der Lösung zugrunde liegenden Organopolysiloxanen, wie in den genannten Patentschriften beschrieben, enthalten sind, abgesättigt sein. Es können somit Organo-Kieselsäuren oder -Silikate als Monomere oder Oligomere in Lösung vorliegen.

Bei dem Verfahren zur Herstellung der erfindungsgemäßen Lösungen findet eine Hydrolyse des Polysiloxangerüstes statt, so daß aus der unlöslichen, hochvernetzten Siloxanmatrix lösliche Organosilanolat-Einheiten entstehen.

Bekanntlich können die Einheiten nach Formel (I) in Abhängigkeit von ihrer Konzentration in wäßriger Lösung auch als lösliche Oligomere vorliegen, bei denen mindestens zwei Moleküle über eine Siloxanbrücke miteinander verknüpft sind. Bei einer Erhöhung der Konzentration einer wäßrigen Lösung von Verbindungen der Formel (I) über die als kritisch ermittelte Schranke von 70 Gew.-% hinaus, entstünden indes höhermolekulare Strukturen, die sich als Feststoff aus der Lösung ausscheiden. Dieser Vorgang ist jedoch durch Zusatz von Wasser umkehrbar (reversibel), so daß bei bestimmten Anwendungen dieser Organosilizium-Verbindungen prinzipiell auch eine entsprechende Suspension eingesetzt werden kann.

Oligomere, d. h. kondensierte Derivate, die im Gleichgewicht zu den entsprechenden Monomeren in Lösung, in Abhängigkeit von z. B. Konzentration, Alkaligehalt und Temperatur vorliegen, können z. B. folgende Struktur haben, 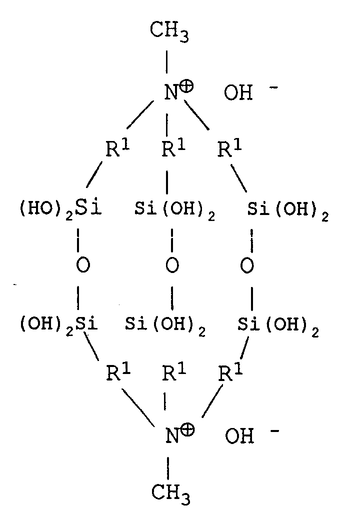
wobei in Abhängigkeit vom Alkaligehalt der Lösung ein Teil oder alle Wasserstoffatome bzw. -ionen der Si-ständigen OH-Gruppen durch Alkalimetallatome bzw. -ionen ersetzt sind.

Je nach eingesetzter Ausgangsverbindung der Formel (I) können in der alkalischen, wäßrigen Lösung der silizium-haltigen Ionenaustauscher gegebenenfalls noch Monomere oder oligomere Silizium-, Titan-, Zirkonium- oder Aluminiumeinheiten vorliegen, welche aus einer teilweisen oder vollständigen Hydrolyse des Siloxan- bzw. Heterosiloxangerüstes der als Vernetzer fungierenden Brückenglieder nach Formel (III) resultieren. In Abhängigkeit von z. B. Konzentration, Alkaligehalt oder Temperatur können diese Vernetzer als Monomere Silikat-, Titanat-, Zirkonat- bzw. Aluminateinheiten, z. B. mit der Struktur

H₃C-Si(OH)₃ oder H₃C-Si(OH)₂(ONa)
oder H₃C-Si(OH)(ONa)₂ oder H₃C-Si(ONa)₃,

vorliegen, oder aber auch als jeweils für sich kondensierte oligomere Derivate, z. B.

H₃C-Si(ONa)₂-O-Si(ONa)₂⁻CH₃,

oder als an hydrolysierte monomere oder oligomere Einheiten nach Formel (I) ankondensierte Derivate.

Gegenstand der Erfindung ist ebenso ein Verfahren zur Herstellung von Lösungen gemäß Anspruch 1, dadurch gekennzeichnet, daß man geformte oder ungeformte polymere, vernetzte Organosiloxan-Ammoniumverbindungen mit kieselsäureartigem Grundgerüst, bestehend aus Einheiten der allgemeinen Formen 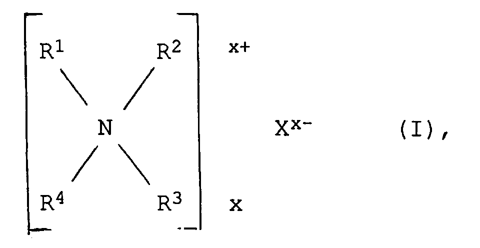
in welcher R¹ und R² gleich oder verschieden sind und eine Gruppe der allgemeinen Formel 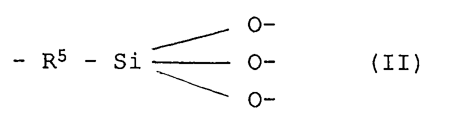
bedeuten, wobei die Stickstoffatome in (I) über die Reste R⁵ mit den Siliziumatomen in (II) verbunden sind und R⁵ eine Alkylengruppe mit 1 bis 10 C-Atomen, eine Cycloalkylengruppe mit 5 bis 8 C-Atomen oder eine Einheit der allgemeinen Formel 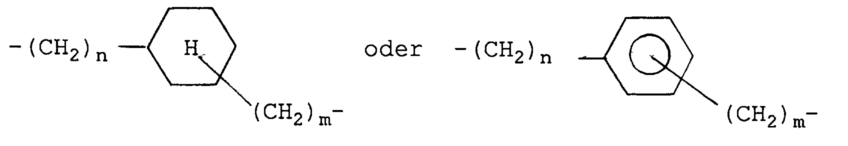
darstellt, in der
n eine Zahl von 1 bis 6 ist und die Zahl der stickstoffständigen Methylengruppen angibt und
m eine Zahl von 0 bis 6 ist,
wobei die freien Valenzen der an das Siliziumatom gebundenen Sauerstoffatome im Edukt wie bei Kieselsäuregerüsten durch Siliziumatome weiterer Gruppen der Formel (II) und/oder mit den Metallatomen einer oder mehrerer der vernetzenden Brückenglieder (III) 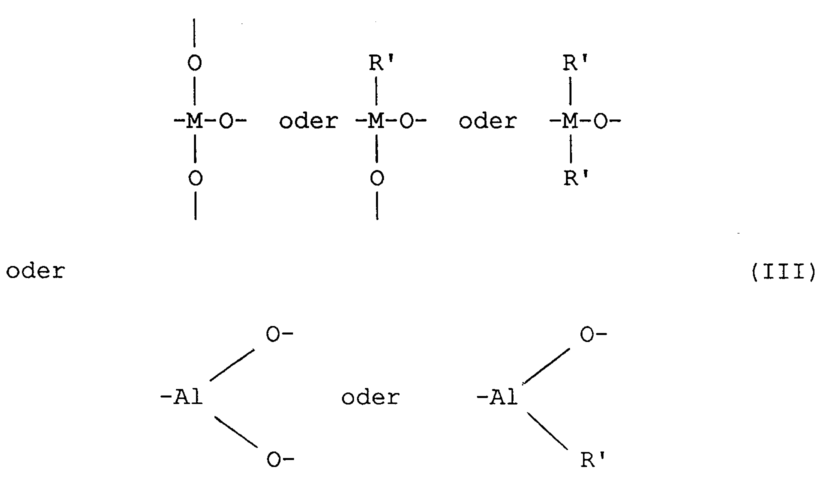
abgesättigt sind , wobei M ein Silizium-, Titan- oder Zirkoniumatom und R' eine lineare oder verzweigte Alkylgruppe mit 1 bis 5 C-Atomen ist und das Verhältnis der Siliziumatome aus den Gruppen der allgemeinen Formel (II) zu den Metallatomen in den Brückengliedern (III) 1 : 0 bis 1 : 10 beträgt, und in welcher R³ gleich R¹ oder R² oder Wasserstoff, eine lineare oder verzweigte Alkylgruppe aus 1 bis 20 C-Atomen, eine aus 5 bis 6 C-Atomen bestehende Cycloalkylgruppe ode die Benzylgruppe ist und R⁴ gleich Wasserstoff, eine lineare oder verzweigte Alkylgruppe mit 1 bis 20 C-Atomen oder eine aus 5 bis 8 C-Atomen bestehende Cycloalkylgruppe darstellt,
X ein Anion mit der Wertigkeit von x gleich 1 bis 3, bevorzugt aus der Gruppe Halogenid oder Sulfat ist, gegebenenfalls durch mehrmaliges Waschen, bevorzugt bei Raumtemperatur, mit einer 0,01 bis 1 molaren, bevorzugt 0,1 bis 0,5 molaren, wäßrigen Alkalihydroxidlösung in das Hydroxid überführt, danach neutral und X-Anionen-frei wäscht, in Wasser bei einer Temperatur zwischen 40 und 200° C, bevorzugt 60 und 100° C, gegebenenfalls unter einem sich in diesem System einstellenden Druck mit einem Alkalihydroxid behandelt, bis sich das eingesetzte feste Polymer gelöst hat.

In der Regel reicht das Kochen unter Rückfluß mit der 0,5-2-fachen molaren Menge Alkalihydroxid, bezogen auf die im eingesetzten Polymer vorhandene molare Menge an Si-Atomen zuzüglich der molaren Menge an gegebenenfalls vorhandenen Si-, Ti-, Zr- oder Al-haltigen Vernetzern, aus.

Es ist möglich, die lösliche Wirkung durch Zusatz von Hilfssubstanzen, die eine erneute Kondensation der Silanolgruppen verhindern, wie etwa Ethylenglycol, zu verstärken. Ebenso kann auch Base im Überschuß eingesetzt werden, um den Lösungsvorgang zu beschleunigen, die dann anschließend teilneutralisiert wird.

Je nach Menge des zu lösenden Polysiloxans kann schon eine sehr kurze Zeit von wenigen Minuten ausreichend sein, es kann aber auch notwendig werden, über einen längeren Zeitraum das Polysiloxan in Base zu lösen, gegebenenfalls unter Nachchargieren von Base oder Polysiloxan. Wird die Lösung in einem Druckbehälter hergestellt, so sind höhere Temperaturen, bis zu 200° C, bei Drucken, die der Summe der Partialdrucke der vorhandenen Komponenten entsprechen, anwendbar. Dies kann zur Beschleunigung des Lösungsvorgangs vorteilhaft sein. Für die Zusammensetzung der wäßrigen Polysiloxanammonium-Lösung ist die Einsatzform des Polysiloxans nach Formel (I) maßgebend. Zur Vermeidung der Anwesenheit unerwünschter Anionen in der Lösung ist es vorteilhaft, vor dem eigentlichen Lösen die feste Ammoniumpolysiloxan-Verbindung zunächst durch einen Ionenaustausch in die gewünschte Form zu überführen.

Ein System, welches wegen der technischen Verfügbarkeit von außerordentlicher Bedeutung ist, ist die wäßrige Lösung von dem als fester Verbindung eingesetzten

[(H₃C)N(CH₂CH₂CH₂SiO_{3/2})₃]⁺ OH⁻

Es ist überraschend, daß auch mit diesem System stabile, nicht gelierende oder Feststoff ausscheidende Lösungen vorliegen, die in der zur Anwendung kommenden Form typischerweise einen Polysiloxangehalt von 5 - 30 Gew.-%, bezogen auf die Gesamtmenge der Lösung aufweisen, aber nur einen Alkalimetallionengehalt von typischerweise 1 - 5 Gew.-%, bezogen auf die Gesamtmenge der Lösung, haben.

### Beispiel 1:

347 g des festen Polysiloxans der Zusammensetzung

[H₃C-N(CH₂CH₂CH₂SiO_{3/2})₃]⁺ Cl⁻

werden zunächst durch mehrmaliges Waschen mit insgesamt 20 l 0,1 m NaOH in die Hydroxidform überführt und danach neutral und chloridfrei gewaschen. Der Feststoff wird mit 1,0 l 2 m NaOH bei 80° C in 2 Stunden gelöst. Die erhaltene klare Lösung wird abgekühlt und auf 2,0 l aufgefüllt, so daß eine verwendungsfähige Lösung erhalten wird, die 1,0 m an NaOH (ca. 3 Gew.-%) und 0,5 m an Ammoniumpolysiloxan (ca. 13 Gew.-%) ist. (Gew.-% bezogen auf die Gesamtmenge der Lösung).

### Beispiel 2:

347 g des Polysiloxans wie in Beispiel 1 werden direkt in 0,5 l 4 m LiOH und 0,25 l Wasser bei 95° C in 1,5 Stunden gelöst, abgekühlt und auf 1,0 l aufgefüllt. Die erhaltene klare Lösung ist 2,0 m an LiOH (ca. 3,5 Gew.-%) und 1,0 m an Ammoniumpolysiloxan (ca. 23 Gew.-%).

## Patentansprüche

1. Wäßrige alkalische Lösungen, enthaltend siliziumhaltige Ionenaustauscher, die aus Einheiten der folgenden allgemeinen Formel bestehen: 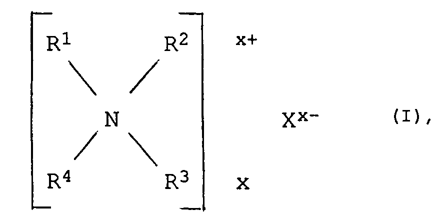 in welcher R¹ und R² gleich oder verschieden sind und eine Gruppe der allgemeinen Formel 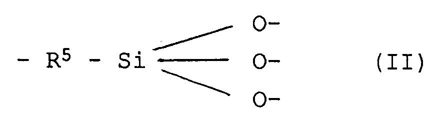 bedeuten, wobei die Stickstoffatome in (I) über die Reste R⁵ mit den Siliziumatomen in (II) verbunden und die freien Valenzen von O teilweise oder vollständig durch H oder Alkalimetallionen abgesättigt sind und R⁵ eine Alkylengruppe mit 1 bis 10 C-Atomen, eine Cycloalkylengruppe mit 5 bis 8 C-Atomen oder eine Einheit der allgemeinen Formel 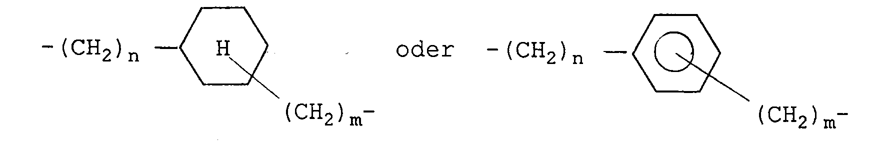 darstellt, in der
n eine Zahl von 1 bis 6 ist und die Zahl der stickstoffständigen Methylengruppen angibt und
m eine Zahl von 0 bis 6 ist,
in welcher R³ gleich R¹ oder R² oder Wasserstoff, eine lineare oder verzweigte Alkylgruppe aus 1 bis 20 C-Atomen, eine aus 5 bis 8 C-Atomen bestehende Cycloalkylgruppe ist und R⁴ Wasserstoff, eine lineare oder verzweigte Alkylgruppe mit 1 bis 20 C-Atomen oder eine aus 5 bis 8 C-Atomen bestehende Cycloalkylgruppe darstellt und X^{x-} ein 1 - bis 3-wertiges Anion bedeutet.

2. Lösung gemäß Anspruch 1,
**dadurch gekennzeichnet**,
daß X^{x-} für OH⁻ steht.

3. Lösung gemäß Anspruch 1 oder 2,
**dadurch gekennzeichnet**,
daß R⁵ einer Propylengruppe entspricht.

4. Lösung gemäß Anspruch 3,
**dadurch gekennzeichnet**,
daß R¹, R² und R³ identisch sind und R⁴ Methyl entspricht.

5. Lösung gemäß Anspruch 4,
**dadurch gekennzeichnet**,
daß sie im wesentlichen gelöste Verbindungen aus dem als feste Verbindung eingesetzten
[(CH₃)N((CH₂)₃SiO_{3/2})₃]⁺X⁻
enthält.

6. Lösung gemäß einem oder mehreren der Ansprüche 1 bis 5,
**dadurch gekennzeichnet**,
daß der Gehalt an gelösten Polysiloxanverbindungen zwischen 0,1 und 70 Gew.-%, bevorzugt 5 bis 30 Gew.-%, liegt.

7. Lösung gemäß einem oder mehreren der Ansprüche 1 bis 5,
**dadurch gekennzeichnet**,
daß der pH-Wert zwischen 7 und 14 liegt.

8. Verfahren zur Herstellung von Lösungen gemäß Anspruch 1,
**dadurch gekennzeichnet**,
daß man geformte oder ungeformte polymere, vernetzte Organosiloxan-Ammoniumverbindungen mit kieselsäureartigem Grundgerüst, bestehend aus Einheiten der allgemeinen Formel 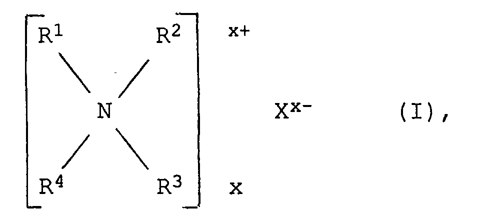 in welcher R¹ und R² gleich oder verschieden sind und eine Gruppe der allgemeinen Formel 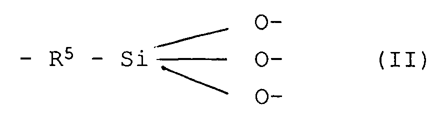 bedeuten, wobei die Stickstoffatome in (I) über die Reste R⁵ mit den Siliziumatomen in (II) verbunden sind und R⁵ eine Alkylengruppe mit 1 bis 10 C-Atomen, eine Cycloalkylengruppe mit 5 bis 8 C-Atomen oder eine Einheit der allgemeinen Formel 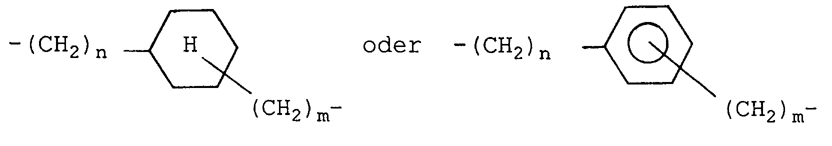 darstellt, in der
n eine Zahl von 1 bis 6 ist und die Zahl der stickstoffständigen Methylengruppen angibt und m eine Zahl von 0 bis 6 ist und das Verhältnis der Siliziumatome in den Gruppen der allgemeinen Formel II zu den Metallatomen in den Brückengliedern 1 : 0 bis 1 : 10 beträgt, und in welcher R³ gleich R¹ oder R² oder Wasserstoff, eine lineare oder verzweigte Alkylgruppe aus 1 bis 20 C-Atomen, eine aus 5 bis 8 C-Atomen bestehende Cycloalkylgruppe ist und R⁴ gleich Wasserstoff, eine lineare oder verzweigte Alkylgruppe mit 1 bis 20 C-Atomen oder eine aus 5 bis 8 C-Atomen bestehende Cycloalkylgruppe darstellt,
X ein Anion mit der Wertigkeit von x gleich 1 bis 3 aus der Gruppe Halogenid, Sulfat, gegebenenfalls durch mehrmaliges Waschen mit einer 0,01 bis 1 molaren wäßrigen Alkalihydroxidlösung in das Hydroxid überführt und danach neutral und X-Ionen-frei wäscht, in Wasser bei einer Temperatur zwischen 40 und 100° C, gegebenenfalls unter einem sich in diesem System einstellenden Druck, mit einem basischen Hydroxid behandelt, bis sich das eingesetzte Polymer gelöst hat.

9. Verfahren gemäß Anspruch 7,
**dadurch gekennzeichnet**,
daß man LiOH, NaOH oder KOH verwendet.

10. Verfahren gemäß Anspruch 8 bis 10,
**dadurch gekennzeichnet**,
daß man das Hydroxid in der 0,5 - 2-fachen molaren Menge, bezogen auf die im Polymeren vorhandenen molaren Mengen an Si-Atomen zuzüglich der gegebenenfalls vorhandenen molaren Mengen Si-, Ti-, Zr- oder Al-haltiger Vernetzergruppen, verwendet.
